# EUROPEAN PATENT SPECIFICATION

(11) **EP 3 325 132 B1**
(45) Date of publication and mention of the grant of the patent: **30.09.2020**
(21) Application number: 16753979.0
(22) Date of filing: 25.07.2016
(51) Int. Cl.: F25B 1/00, F25B 25/00, F28D 21/00, F28F 27/00, B01D 53/26, F28D 7/08

(54) **APPARATUS FOR DRYING A GAS**
VORRICHTUNG ZUR TROCKNUNG VON GAS
APPAREIL DE SÉCHAGE D'UN GAZ

(30) Priority: 24.07.2015 IT UB20152486; 24.07.2015 IT UB201557731 U
(43) Date of publication of application: 30.05.2018
(73) Proprietor: M.T.A. S.p.A., 35026 Conselve PD (IT)
(72) Inventor: MANTEGAZZA, Mario, 35020 Casalserugo (PD) (IT)
(74) Representative: Locas, Davide
(86) International application number: PCT/IB2016/054425
(87) International publication number: WO 2017/017595

(56) References cited:
- EP-A2- 1 081 445
- WO-A1-2008/112595
- WO-A1-2012/126680
- KR-A- 20130 083 502
- US-A- 5 611 209
- US-B1- 6 393 850

## Description

The present invention relates to an apparatus for drying a gas, for example intended to lower the humidity content in a flow of humid compressed air and/or other humid compressed gas, of the type comprising a drying circuit for the gas to be treated and a cooling circuit for an intermediate working fluid.

In the field of technical systems for the treatment of compressed gases, it is known to use units formed by a dryer associated with a cooling circuit that effects a lowering of the temperature of the fluid to be treated.

This heat exchange is used to bring the fluid to be treated to a state close to the dew point and eliminate the humid component by means of a condensate separator.

Document KR20130083502A discloses a cooling dryer to cool and dry an object by precisely controlling the temperature of a secondary coolant. Document WO2012126680 A1 discloses a compressed gas dryer.

One of the main difficulties associated with this type of system concerns the limited possibilities for adjusting the operating parameters.

It is evident that it is desirable, mainly for the purpose of optimising energy consumption, to use different operating parameters as working conditions change.

In particular, depending on the external temperature it will be necessary to provide a different heat exchange so that the fluid to be treated arrives at the condensate separator at a temperature close to that of the dew point, or in any event adjusted as desired.

However, adjustment of the cooling circuit, which is typically formed by a compressor, a condenser, a throttling unit and an evaporator placed in sequence, proves to be complex in many cases.

The response of the cooling circuit and the capacity for adjusting the operating parameters of the compressors does not make it possible to optimally follow the changing load required to effect the drying of the incoming air flow.

This is mainly due to the fact that the compressors of the cooling circuits are intended to operate at their nominal load, and typically the change in load is carried out by simply interrupting the operation of the compressor.

It is clear that an abrupt change in the thermal load can be obtained in this manner, but not a gradual adjustment, and this fact makes it necessary to adopt a rather loose thermal approach.

A possible solution to this problem is described in patent US 5228504, which suggests using sand, or another thermal mass with similar characteristics, in order to improve efficiency and control of the heat exchange.

The presence of this thermal mass makes it possible to store a certain amount of thermal energy, to be used during the stages when the operation of the compressor is interrupted.

However, it is clear that this solution requires a specific construction of the heat exchanger and is therefore not completely versatile for all types of systems.

The technical problem addressed by the present invention is that of providing a gas drying apparatus that is structurally and functionally designed to make it possible to overcome the disadvantages mentioned above with reference to the prior art.

This problem is solved by the apparatus according to claim 1.

The present invention offers some significant advantages. The main advantage lies in the fact that the apparatus according to the present invention makes it possible to improve energy management, optimising the heat exchange that takes place between the air and/or other gas to be dried and the cooling fluid.

It is thus possible to operate with a particularly precise thermal approach. Furthermore, the invention is particularly versatile in that the apparatus lends itself to using components already adopted in known applications, and therefore without any specific design of components that are otherwise already available.

Other advantages, features and modes of use of the present invention will become apparent from the following detailed description of a number of embodiments, given by way of non-limitative example. Reference will be made to the figures of the accompanying drawings, wherein:
Figure 1 is a perspective view of an apparatus for drying a gas according to the present invention, from which some protective panels have been removed;
Figure 2 is a further perspective view of the apparatus for drying a gas of Figure 1, from which some elements have been removed in order to illustrate the internal components of a reservoir tank, a detail of the apparatus according to the present invention;
Figure 3 is a perspective view of a cooling circuit, a detail of the apparatus according to the present invention, and of the reservoir tank of Figure 2, from which further elements have been removed to allow greater clarity of description;
Figure 4 is a sectional perspective view of the reservoir tank of Figure 3; and

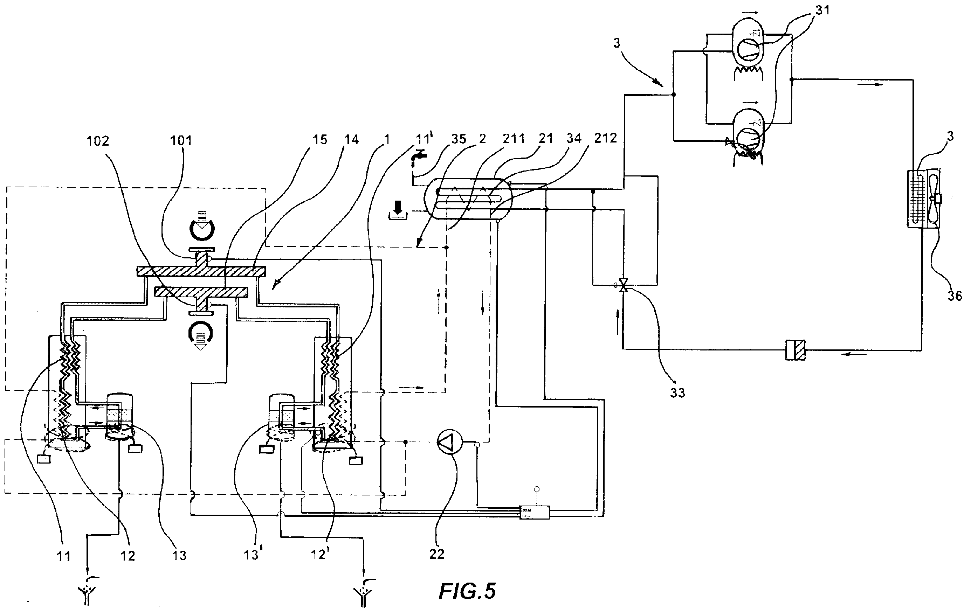

Figure 5 is a functional diagram of the apparatus for drying a gas according to the present invention.

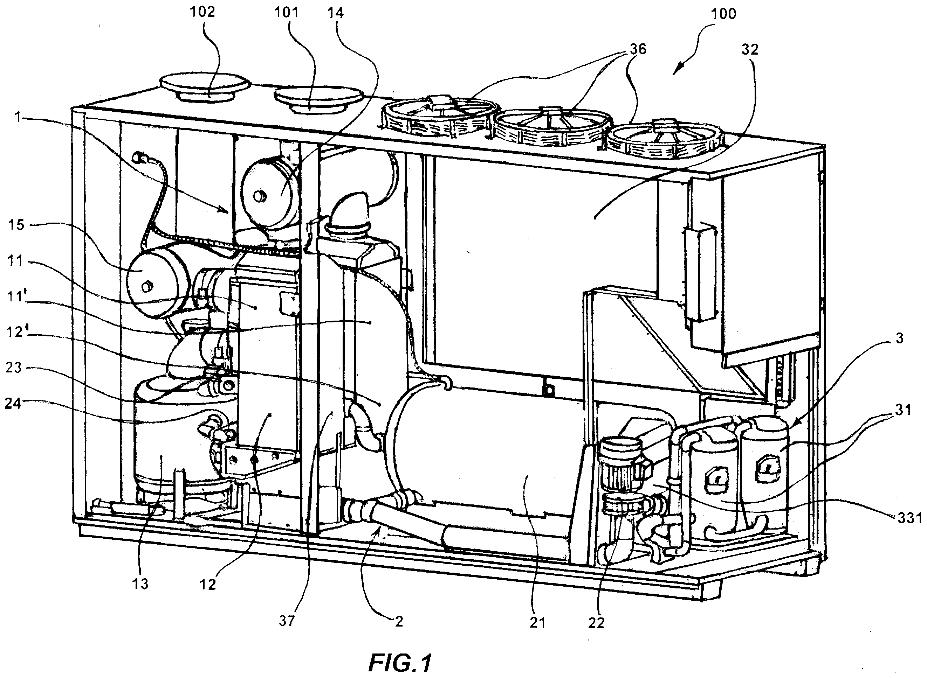

With reference initially to Figure 1, an apparatus for drying a gas is schematically indicated as a whole by the number 100.

According to a preferred embodiment, the apparatus has the form of a parallelepiped and comprises an inlet 101 for the gas to be treated and an outlet 102 for the treated gas. Preferably, the inlet and the outlet are created by means of a flanged pipe that allows them to be connected to an air distribution system.

Again according to a preferred embodiment, the inlet 101 and the outlet 102 are arranged adjacent to each other at an end portion of the apparatus 100. The apparatus 100 further comprises a drying circuit 1 for drying the gas introduced through the inlet 101 that preferably extends at said end portion, below the inlet 101 and the outlet 102.

The drying circuit 1 comprises a first heat exchanger 11 and a second heat exchanger 12 created in such a way as to lower the temperature of the gas to be treated and preferably bring it to a state close to the dew point.

At the outlet from the second exchanger 12, the gas is sent to a condensate separator 13, in which the condensed moisture is separated in water and the moisture content present in said separator is therefore lowered in a known manner.

According to a preferred embodiment, before arriving at the outlet 102, the gas is made to pass through the first exchanger 11, preferably in a direction contrary to the incoming flow of compressed air, in such a way as to exploit its (low) temperature in order to effect a first heat exchange with the flow of inlet gas. In other words, a pre-cooling of the inlet gas takes place, as well as an energy recovery with post-heating for the outgoing dried gas, which in typical applications is delivered to the user at a temperature close to the ambient temperature.

In the second exchanger 12, on the other hand, there is a heat exchange of the gas with a working fluid of a first cooling circuit 2, in a manner that will be illustrated in greater detail below.

According to a preferred embodiment, the gas drying circuit has a vertical development, with the first and the second exchanger in line with each other. At the outlet from the second exchanger 12 the circuit reverses its course, in such a way as to be directed upwards in the direction of the outlet 102. In other words, the drying circuit has an essentially U-shaped development.

In this way, the action of gravity can be advantageously used for collecting the humid fraction present in the gas and separated by the separator 13. Again preferably, the drying circuit comprises a further series of first and second exchangers and condensate separator, indicated in the figures respectively with the numbers 11', 12' and 13'. It is, however, evident that additional series of exchangers and condensate separator may be also provided, thus repeating the concept outlined above.

The two series of exchangers and separator are all arranged in parallel with each other. For this purpose, the drying circuit 1 further comprises a divider 14, which divides the flow of gas deriving from the inlet 101 and directs it respectively towards the exchangers 11 and 11'. In addition, the circuit 1 comprises a manifold 15, which receives the flow of gas deriving from the separators 13 and 13' and exiting from the exchangers 11 and 11', in order to direct it towards the outlet 102.

In any event, reference will be made below to a single series of exchangers and condensate separator, it being understood that the same characteristics also apply to the additional series in parallel, unless otherwise specified.

As mentioned previously, the apparatus 100 further comprises a first cooling circuit 2 for a working fluid, intended to effect a heat exchange with the gas in the second exchanger 12.

The first cooling circuit comprises a reservoir tank 21 for the working fluid, a circulation pump 22 for the working fluid, an inlet manifold 23 and an outlet manifold 24 that connect the cooling circuit 2 to the second exchanger 12. Preferably, the first manifold 23 is created in such a way as to introduce the working fluid into the second exchanger 12, while the second manifold 24 receives the working fluid exiting from the second exchanger 12 once a heat exchange with the gas to be dried has occurred.

The pump 22 allows the working fluid to be made to circulate inside the second exchanger 12, so as to obtain the required heat exchange.

The use of the pump 22 is particularly advantageous in that it makes it possible to adjust the flow of working fluid and therefore also the heat exchange effected in the second exchanger 12.

The use of the reservoir tank 21 also makes it possible to have a sufficient quantity of cold fluid available to follow the load changes required according to the flow of incoming gas and the thermodynamic conditions of said incoming gas.

Additionally, according to a preferred embodiment, the working fluid used is water, glycolated water, or glycolated water together with a fluid capable of changing phase, which is particularly advantageous in that makes it easier to render the apparatus 100 modular.

In this regard, it should be noted that the apparatus can advantageously be subdivided into modules: a first module defined by the drying circuit 1, and a second module defined by the cooling circuit 2, or more generally by the reservoir tank 21, and by a second cooling circuit 3, which will be described in greater detail below. This feature therefore allows a more flexible installation that complies with any installation limitations present in the actual installations.

It should also be noted that in this case, the use of said fluids instead of a traditional refrigerant fluid does not require any high-pressure piping. This also allows the glycolated water, or other working fluid used, to be introduced into the tank simply by means of a feed pipe 35.

As mentioned above, the apparatus according to the present invention further comprises a second cooling circuit 3 functioning with a refrigerant fluid, essentially formed by a refrigerating circuit.

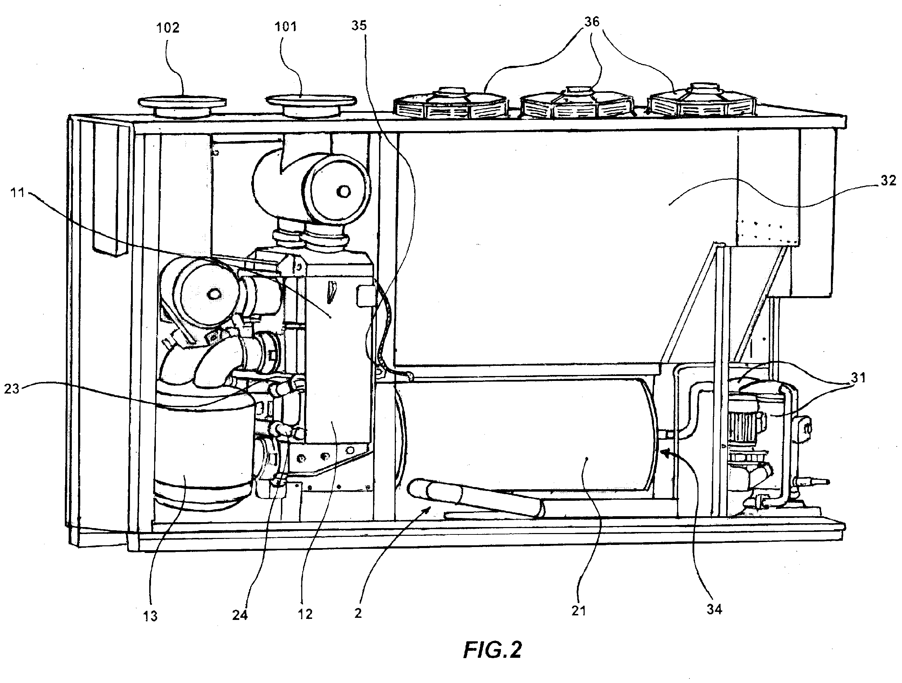

In particular, the cooling circuit 3, illustrated in detail in Figure 2, comprises in succession a compressor 31, a condenser 32, a throttling unit 33 and an evaporator 34. In the embodiment illustrated in the figures, there is a pair of compressors 31.

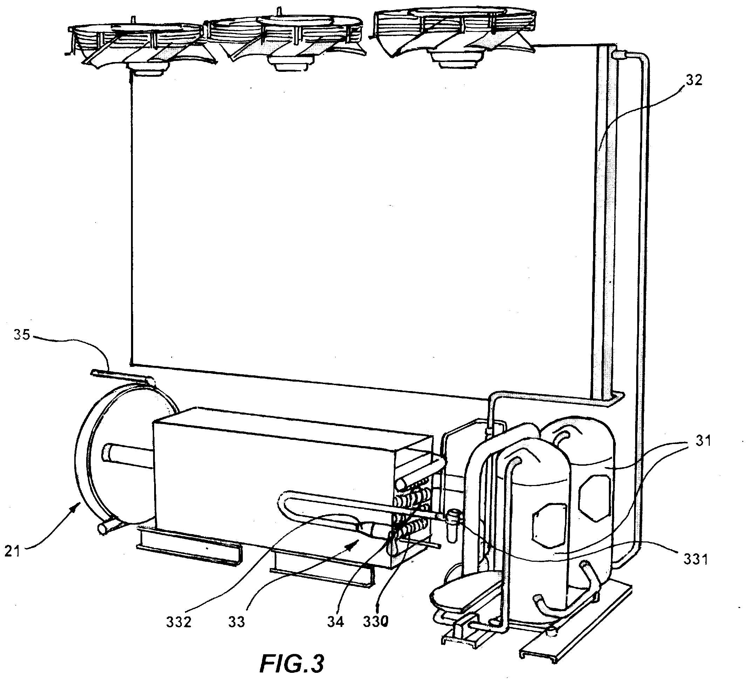

As can be seen in Figures 2 and 3, the evaporator 34 is housed inside the reservoir tank 21 in such a way that the evaporation of the refrigerant fluid directly results in the cooling of the working fluid present in the tank 21.

This arrangement allows the apparatus according to the present invention to render the adjustment of the heat exchange in the exchanger 12, and therefore in the drying circuit 1, independent of the operating parameters of the cooling circuit 3.

Thus, the compressor can always operate in optimal conditions, cyclically interrupting the operation when the fluid present in the tank has reached the necessary temperature for effecting the drying of the compressed gas.

The working fluid present inside the tank therefore defines a thermal mass that can be advantageously used in the gas drying process.

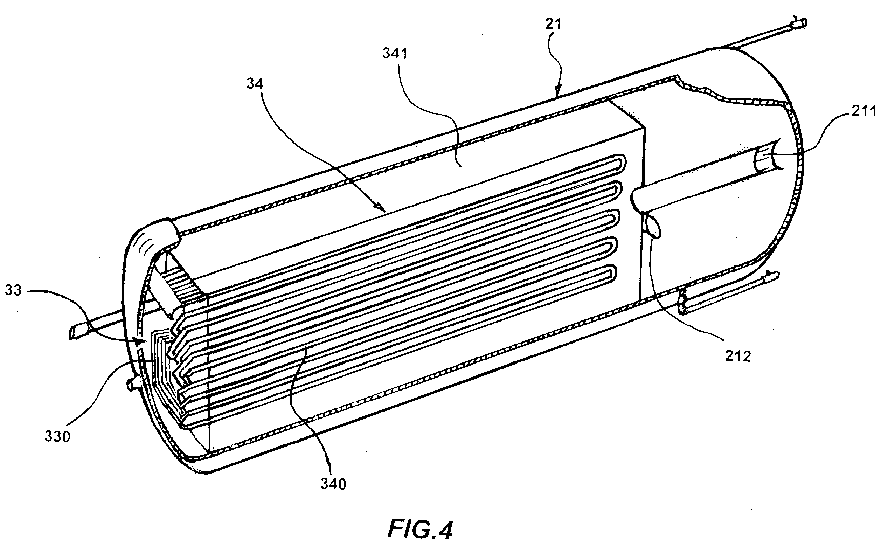

The evaporator 34 is illustrated in greater detail in Figure 4, together with the tank 21 in which it is housed.

The evaporator 34 is preferably formed by a tube bundle 340, inside which flows the cooling fluid, housed inside a box-like casing 341 which, in turn, is housed inside the tank 21. An alternative embodiment, not illustrated in the figures, can be represented by a finned block.

In one embodiment, the tank 21 comprises an inlet opening 211 and an outlet opening 212 for the working fluid that exchanges heat with the cooling fluid. According to a preferred embodiment, the inlet opening 211 and the outlet opening 212 are created at the same end portion of the tank 21 and are in communication with each other through the box-like casing 341.

In this way, the working fluid entering the tank 21 is made to flow inside the box-like casing 341, passing through the tube bundle 340, and then to turn towards the outlet opening 212 through an air space defined between the box-like casing and the wall of the tank.

Thus, the cooling capacity of the tube bundle and the volume of the tank can be optimally exploited.

According to a preferred embodiment, the throttling unit 33 comprises a thermostatic expansion valve 331, which controls the flow of the cooling fluid entering the evaporator 34, and preferably a plurality of capillary tubes 330, connected to the expansion valve 331 of the cooling circuit by means of a manifold 332 and extending towards respective bundles of the tube bundle 330.

According to a preferred embodiment, the expansion valve 331 is located in proximity to the tank 21 and, preferably, the capillary tubes 330 inside the same.

More generally, preferably the throttling unit 33 is housed in proximity to the tank 21, thus allowing an optimal arrangement of the components.

With reference once again to Figure 2, according to a preferred embodiment the condenser 32 is also formed by an exchanger with a tube bundle and preferably extends in a vertical direction along a wall of the apparatus 100.

In order to obtain adequate heat disposal, the apparatus 100 also comprises fans 36.

In addition, the second cooling circuit 3, and therefore also the condenser 32, is preferably separated by a wall 37 from the drying circuit 1.

More generally, the wall 37 makes it possible to separate the first module, i.e. that defined by the drying circuit 1, from the second module, i.e. that defined by the first and second cooling circuits 2, 3.

The invention therefore solves the proposed problem, while simultaneously providing numerous advantages, including the ability to obtain an adjustment of the heat exchange that occurs in the heat exchanger according to the required load, and, at the same time, keeping the compressor and the other elements of the cooling circuit operating under optimal conditions.

At the same time, the apparatus according to the present invention also has a high degree of modularity in that the drying circuit and the cooling circuits can either be integrated in a single structure, as in the present embodiment, or separated from each other.

The use of a low-pressure cooling circuit also makes it easy to use relatively long lengths of piping.

Thus, it is possible to use a first housing assembly for the drying circuit 1 and a second housing assembly for the reservoir tank 21 and the second cooling circuit 3. These units can therefore be easily connected by means of pipes, for the reasons outlined above, thus making it possible to place the two units remotely from each other.

## Claims

1. Apparatus (100) for drying a gas, comprising:
a drying circuit (1) for said gas, comprising:
a first (11) and a second (12) heat exchanger;
a condensate separator (13);
a first cooling circuit (2) inside which flows a working fluid and which comprises:
a reservoir tank (21) for said working fluid;
a circulation pump (22) for said working fluid;
an inlet manifold (23) and an outlet manifold (24) for respectively introducing the working fluid into said second exchanger (12) and
receiving the working fluid exiting from said second exchanger (12) after a thermal exchange with the gas to be dried has occurred;
a second cooling circuit (3) inside which flows a cooling fluid and which comprises in succession a compressor (31), a condenser (32), a throttling unit (33) and an evaporator (34), **characterised in that** said evaporator (34) is housed inside said reservoir tank (21) for the cooling of said working fluid.

2. Apparatus (100) for drying a gas according to claim 1, wherein said evaporator (34) comprises a tube bundle (340), inside which flows the cooling fluid, housed inside a box-like casing (341) which, in turn, is housed inside the reservoir tank (21)

3. Apparatus (100) according to claim 2, wherein said reservoir tank (21) further comprises an inlet opening (211) and an outlet opening (212) for the working fluid of said first cooling circuit (2), said inlet opening (211) and said outlet opening (212) being in communication with each other through the box-like casing (341), in this way, the working fluid entering the tank (21) is made to flow inside the box-like casing (341), passing through the tube bundle (340), and then to turn towards the outlet opening (212) through an air space defined between the box-like casing and the wall of the tank.

4. Apparatus (100) according to claim 3, wherein said inlet opening (211) and said outlet opening (212) are created at the same end portion of the tank (21).

5. Apparatus (100) according to one of the preceding claims, wherein said working fluid of said first cooling circuit (2) comprises glycolated water.

6. Apparatus (100) according to one of the preceding claims, wherein said drying circuit (1) is located at an end portion of the apparatus (100).

7. Apparatus (100) according to claim 6, wherein said drying circuit (1) comprises an inlet (101) and an outlet (102) and develops essentially vertically, with said first (11) and said second (12) exchanger being in line with each other, said drying circuit (1) reversing its course at the outlet of the second exchanger (12), in such a way as to be directed upwards in the direction of said outlet (102).

8. Apparatus (100) according to one of the preceding claims, further comprising a bulkhead dividing said condenser (32) from said tank (21).

9. Apparatus (100) according to one of the preceding claims, wherein said throttling unit (33) is housed in proximity to said tank (21).

10. Apparatus (100) according to one of the preceding claims, comprising a first internal housing assembly in which is housed at least said drying circuit (1) and a second housing assembly in which is housed at least said reservoir tank (21) and said second cooling circuit (3), said second housing assembly being placed or placeable in a remote position with respect to said first housing assembly.

## Patentansprüche

1. Vorrichtung (100) zum Trocknen eines Gases, umfassend:
- einen Trocknungskreislauf (1) für das Gas, umfassend:
- einen ersten (11) und einen zweiten (12) Wärmetauscher;
- einen Kondensatabscheider (13);
- einen ersten Kühlkreislauf (2), in dem ein Arbeitsfluid fließt und der Folgendes umfasst:
- einen Vorratsbehälter (21) für das Arbeitsfluid;
- eine Umwälzpumpe (22) für das Arbeitsfluid;
- einen Einlasskrümmer (23) und einen Auslasskrümmer (24) zum jeweiligen Einleiten des Arbeitsfluids in den zweiten Austauscher (12) und zum Aufnehmen des aus dem zweiten Austauscher (12) austretenden Arbeitsfluids, nachdem ein thermischer Austausch mit dem zu trocknenden Gas aufgetreten ist;
- einen zweiten Kühlkreislauf (3), in dem ein Kühlfluid fließt und der nacheinander einen Kompressor (31), einen Kondensator (32), eine Drosseleinheit (33) und einen Verdampfer (34) aufweist, **dadurch gekennzeichnet, dass** der Verdampfer (34) im Vorratsbehälter (21) zum Kühlen des Arbeitsfluids aufgenommen ist.

2. Vorrichtung (100) zum Trocknen eines Gases nach Anspruch 1, wobei der Verdampfer (34) ein Rohrbündel (340) aufweist, in dem das Kühlfluid fließt, das in einem kastenartigen Gehäuse (341) aufgenommen ist, das wiederum im Vorratsbehälter (21) aufgenommen ist.

3. Vorrichtung (100) nach Anspruch 2, wobei der Vorratsbehälter (21) ferner eine Einlassöffnung (211) und eine Auslassöffnung (212) für das Arbeitsfluid des ersten Kühlkreislaufs (2) aufweist, wobei die Einlassöffnung (211) und die Auslassöffnung (212) durch das kastenartige Gehäuse (341) miteinander dadurch in Verbindung stehen, dass das in den Tank (21) eintretende Arbeitsfluid dazu gebracht wird, in das kastenartige Gehäuse (341) zu fließen, durch das Rohrbündel (340) hindurchzufließen und sich dann durch einen zwischen dem kastenartigen Gehäuse und der Tankwand gebildeten Luftraum zur Auslassöffnung (212) zu wenden.

4. Vorrichtung (100) nach Anspruch 3, wobei die Einlassöffnung (211) und die Auslassöffnung (212) am gleichen Endabschnitt des Tanks (21) ausgebildet sind.

5. Vorrichtung (100) nach einem der vorhergehenden Ansprüche, wobei das Arbeitsfluid des ersten Kühlkreislaufs (2) glykoliertes Wasser aufweist.

6. Vorrichtung (100) nach einem der vorhergehenden Ansprüche, wobei der Trocknungskreislauf (1) an einem Endabschnitt der Vorrichtung (100) angeordnet ist.

7. Vorrichtung (100) nach Anspruch 6, wobei der Trocknungskreislauf (1) einen Einlass (101) und einen Auslass (102) aufweist und sich im Wesentlichen vertikal, mit dem ersten (11) und zweiten (12) Austauscher in einer Linie miteinander erstreckt, wobei der Trocknungskreislauf (1) seinen Verlauf am Auslass des zweiten Wärmetauschers (12) derart umkehrt, dass er in Richtung des Auslasses (102) nach oben ausgerichtet ist.

8. Vorrichtung (100) nach einem der vorhergehenden Ansprüche, die ferner eine Trennwand, die den Kondensator (32) vom Tank (21) trennt, aufweist.

9. Vorrichtung (100) nach einem der vorhergehenden Ansprüche, wobei die Drosseleinheit (33) in der Nähe des Tanks (21) aufgenommen ist.

10. Vorrichtung (100) nach einem der vorhergehenden Ansprüche, die eine erste innere Gehäuseanordnung, in der zumindest der Trocknungskreislauf (1) aufgenommen ist, und eine zweite Gehäuseanordnung aufweist, in der zumindest der Vorratsbehälter (21) und der zweite Kühlkreislauf (3) aufgenommen sind, wobei die zweite Gehäuseanordnung in einer entfernten Position in Bezug auf die erste Gehäuseanordnung angeordnet oder anordenbar ist.

## Revendications

1. Appareil (100) de séchage d'un gaz, comprenant :
un circuit de séchage (1) pour ledit gaz, comprenant :
un premier (11) et un second (12) échangeur de chaleur ;
un séparateur de condensat (13) ;
un premier circuit de refroidissement (2) à l'intérieur duquel s'écoule un fluide de travail et qui comprend :
un réservoir (21) pour ledit fluide de travail ;
une pompe de circulation (22) pour ledit fluide de travail ;
un collecteur d'entrée (23) et un collecteur de sortie (24) pour respectivement introduire le fluide de travail dans ledit second échangeur (12) et recevoir le fluide de travail sortant dudit second échangeur (12) après qu'un échange thermique avec le gaz à sécher s'est déroulé ;
un second circuit de refroidissement (3) à l'intérieur duquel s'écoule un fluide de refroidissement et qui comprend successivement un compresseur (31), un condenseur (32), une unité d'étranglement (33) et un évaporateur (34), **caractérisé en ce que** ledit évaporateur (34) est logé à l'intérieur dudit réservoir (21) pour le refroidissement dudit fluide de travail.

2. Appareil (100) de séchage d'un gaz selon la revendication 1, dans lequel ledit évaporateur (34) comprend un faisceau de tubes (340), à l'intérieur duquel s'écoule le fluide de refroidissement, logé à l'intérieur d'un caisson en forme de boîte (341) qui, à son tour, est logé à l'intérieur du réservoir (21).

3. Appareil (100) selon la revendication 2, dans lequel ledit réservoir (21) comprend en outre une ouverture d'entrée (211) et une ouverture de sortie (212) pour le fluide de travail dudit premier circuit de refroidissement (2), ladite ouverture d'entrée (211) et ladite ouverture de sortie (212) étant en communication l'une avec l'autre à travers le caisson en forme de boîte (341) de telle manière que le fluide de travail entrant dans le réservoir (21) soit amené à s'écouler à l'intérieur du caisson en forme de boîte (341), en passant à travers le faisceau de tubes (340), puis à tourner vers l'ouverture de sortie (212) à travers un espace d'air défini entre le caisson en forme de boîte et la paroi du réservoir.

4. Appareil (100) selon la revendication 3, dans lequel ladite ouverture d'entrée (211) et ladite ouverture de sortie (212) sont créées à la même portion d'extrémité du réservoir (21).

5. Appareil (100) selon l'une des revendications précédentes, dans lequel ledit fluide de travail dudit premier circuit de refroidissement (2) comprend de l'eau glycolée.

6. Appareil (100) selon l'une des revendications précédentes, dans lequel ledit circuit de séchage (1) est situé à une portion d'extrémité de l'appareil (100).

7. Appareil (100) selon la revendication 6, dans lequel ledit circuit de séchage (1) comprend une entrée (101) et une sortie (102) et se déploie sensiblement verticalement, avec ledit premier (11) et ledit second (12) échangeur alignés l'un avec l'autre, ledit circuit de séchage (1) s'inversant à la sortie du second échangeur (12), de manière à être dirigé vers le haut dans le sens de ladite sortie (102).

8. Appareil (100) selon l'une des revendications précédentes, comprenant en outre une cloison divisant ledit condenseur (32) dudit réservoir (21).

9. Appareil (100) selon l'une des revendications précédentes, dans lequel ladite unité d'étranglement (33) est logée à proximité dudit réservoir (21).

10. Appareil (100) selon l'une des revendications précédentes, comprenant un premier ensemble de logement interne dans lequel est logé au moins ledit circuit de séchage (1) et un second ensemble de logement dans lequel sont logés au moins ledit réservoir (21) et ledit second circuit de refroidissement (3), ledit second ensemble de logement étant placé ou pouvant être placé à une position à distance dudit premier ensemble de logement.
